## Europäisches Patentamt
## European Patent Office
## Office européen des brevets

(19)

(11) Veröffentlichungsnummer : **0 046 182 B1**

(12)

# EUROPÄISCHE PATENTSCHRIFT

(45) Veröffentlichungstag der Patentschrift :
26.10.83

(51) Int. Cl.³ : **F 01 P 1/00, F 01 P 5/08**

(21) Anmeldenummer : 81105324.8

(22) Anmeldetag : 09.07.81

(54) **Brennkraftmaschine mit einem Retarder.**

(30) Priorität : 16.08.80 DE 3031059

(43) Veröffentlichungstag der Anmeldung :
24.02.82 Patentblatt 82/08

(45) Bekanntmachung des Hinweises auf die Patenterteilung : 26.10.83 Patentblatt 83/43

(84) Benannte Vertragsstaaten :
AT CH. DE FR GB IT LI NL SE

(56) Entgegenhaltungen :
CH A 294 837
DE A 2 741 244
DE A 2 803 569
DE C 841 851
DE C 871 855
DE C 1 230 615

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Tholen, Paul, Dipl.-Ing.
Im Lüh 19
D-5060 Bergisch Gladbach 3 (DE)
Erfinder : Lichtblau, Leo, Dipl.-Ing.
Alte Heide 28
D-5000 Köln 90 (DE)
Erfinder : Albers, Friedemann, Dr.-Ing.
Ginsterweg 28
D-5205 St. Augustin 1 (DE)
Erfinder : Esche, Dieter, Dipl.-Ing.
Schmittgasse 91
D-5000 Köln 90 (DE)

Jouve, 18, rue St-Denis, 75001 Paris, France

## Brennkraftmaschine mit einem Retarder

Die Erfindung bezieht sich auf eine Vorrichtung der im Oberbegriff des ersten Anspruchs angegebenen Art.

Aus der DE-PS 12 30 615 ist eine luftgekühlte Brennkraftmaschine mit einem Retarderölwärmetauscher bekannt, welcher nur im Bremsbetrieb Kühlluft erhält, im normalen Motorbetrieb ist er durch Abluftklappen verschlossen.

Der Nachteil dieser Vorrichtung besteht darin, daß durch das Öffnen der Abluftklappen der Haubendruck sinkt, so daß dadurch der Luftdurchsatz durch den Retarderölwärmetauscher relativ gering ist und der Wärmetauscher deshalb zum Abführen der anfallenden Wärmemenge relativ groß ausgeführt werden muß. Der Platz für einen derart großen Wärmetauscher ist aber selten gegeben, erst recht nicht bei den heute beengten Einbauverhältnissen in Kraftfahrzeugen.

Diese Probleme treten insbesondere dann verstärkt auf, wenn höher aufgeladene Brennkraftmaschinen in Fahrzeugen verwendet werden, bei denen der Anteil der Motorreibung und der Bremsleistung mittels Motorbremse nur noch einem Bruchteil der vorgeschriebenen Bremsleistung ausmachen.

Aufgabe der vorliegenden Erfindung ist es, bei einer Brennkraftmaschine der eingangs genannten Art eine für das Retarderöl wirksame Kühlanlage zu konzipieren, die auch in Kraftfahrzeugen eingebaut werden kann.

Diese Aufgabe wird erfindungsgemäß durch die kennzeichnenden Merkmale des ersten Anspruchs gelöst. Die Erfindung beruht auf der Erkenntnis, daß nur dann eine ausreichende Kühlleistung für das Retarderöl zur Verfügung steht, wenn der entsprechende Wärmetauscher mit einer von der Motorkühlanlage unabhängigen Einrichtung zur Erzeugung von Kühlluft in Verbindung steht. Da der Retarderwärmetauscher nur im Bremsbetrieb benutzt wird, ist es weiterhin sinnvoll, in diesem Betrieb, in dem die Brennkraftmaschine praktisch als Kompressor arbeitet, d. h. keine Verbrennung in den Zylindern stattfindet, mit diesem Gasstrom einen Kühlluftstrom zu erzeugen. Hierbei wird gleichzeitig der Vorteil erreicht, daß die Brennkraftmaschinenbremsleistung durch das Arbeiten als Kompressor erhöht wird.

Eine vorteilhafte Ausführung der Erfindung sieht vor, den von der Brennkraftmaschine gelieferten, aufgestauten Gasstrom in eine Umgehungsleitung zur Abgasleitung zu leiten. Die dort angeordnete Einrichtung, welche die Energie des Gasstromes als Antriebsenergie ausnutzt, wird dabei bevorzugt im Bereich extrem ungünstiger Wirkungsgrade betrieben, da dadurch eine Erhöhung des Gegendruckes in der Umgehungsleitung auftritt, so daß die praktisch als Kompressor arbeitende Brennkraftmaschine gegen einen erhöhten Gegendruck arbeiten muß, so daß deren Bremsleistung weiter erhöht wird.

Eine Weiterbildung der Erfindung schlägt vor, die Einrichtung als Turbine auszubilden, diese direkt oder über ein Zwischengetriebe mit einem Gebläse zu verbinden, welches dann die Kühlluft ansaugt und weiter zu dem Retarderölwärmetauscher fördert. Die Turbine kann hierbei auf dem Umfang eines Kühlluft-Gebläserades (Tip-Fan) oder über eine Welle mit dem Kühlluftgebläse verbunden sein.

Eine andere bevorzugte Ausführungsform sieht vor, die Turbine mit einem weiteren Kompressor zu verbinden, der Umgehungsluft ansaugt und verdichtet und zu einem Kühlgebläse führt, welches auf seinem Läuferumfang Schaufeln aufweist, auf die der von dem Kompressor gelieferte Umgehungsstrom auftrifft und dadurch das Kühlgebläse antreibt.

Diese Anordnung ist insbesondere dann vorteilhaft, wenn eine direkte Beaufschlagung der Gebläseturbine zu deren Verschmutzung und zu hohen Temperaturen führt. Außerdem ermöglicht diese Ausführung eine bessere Anpassung der Gebläseturbine an den zur Verfügung stehenden Abgasstrom.

Eine andere Weiterbildung sieht vor, den Kompressorausgang des von der Turbine angetriebenen Kompressors mit einer Ejektordüse zu verbinden, die im engsten Querschnitt einer Kühlluftführung angeordnet ist, wodurch Luft angesaugt wird und durch den Retarderölwärmetauscher gefördert werden kann. Die Ejektordüse kann entweder einen kreisförmigen oder einen kreisringförmigen oder einen rosettenförmigen Querschnitt aufweisen, wobei mit letzteren eine größere Kühlluftmenge gefördert werden können.

Eine andere Ausbildung sieht vor, den Gasstrom direkt in eine Ejektordüse zu führen, die im engsten Querschnitt einer Kühlluftführung angeordnet ist, wodurch kühlluft durch den vorgeschalteten Retarderölwärmetauscher durchgesaugt wird. Die Ejektordüse kann wie im vorausgegangenen Abschnitt beschrieben ausgeführt sein.

Insbesondere bei in Kraftfahrzeugen eingebauten Brennkraftmaschine, die mit der erfindungsgemäßen Vorrichtung ausgerüstet sind, ist die Weiterbildung nach Anspruch 7 vorteilhaft. Damit ist man bis auf die zu der Abgasleitung angeordnete Nebenleitung und die Retarderölzufuhr- und -abfuhrleitungen in der Retarderölkühlanlage unabhängig von der Brennkraftmaschine, so daß diese Kühlanlage dort vorgesehen werden kann, wo für sie der meiste Platz vorhanden ist. Dies ist insbesondere auch für Brennkraftmaschinen, die nachträglich mit einer derartigen Kühlanlage ausgerüstet werden sollen, von Vorteil. Ebenso bietet diese Ausbildung Vorteile hinsichtlich der Wartung und des evtl. Austausches im Reparaturfalle.

Im folgenden wird die Erfindung anhand bevorzugter Ausführungsbeispiele näher erläutert.

Es stellen dar :

Figur 1 eine Brennkraftmaschine mit Retarder und erfindungsgemäßer Kühlanlage, wobei das Kühlgebläse direkt mit der Turbine verbunden ist,

Figur 2 eine Brennkraftmaschine mit Retarder und einem Abgasturbolader im Nebenstrom zur Abgasleitung, der mit einem Tip-Fan zur Erzeugung der Kühlluft ausgerüstet ist,

Figur 3 eine Brennkraftmaschine mit Retarder und einem im Nebenstrom zur Abgasleitung angeordneten Tip-Fan zur Erzeugung der Kühlluft,

Figur 4 eine Brennkraftmaschine mit Retarder und Abgasturbolader im Nebenstrom zur Abgasleitung und einer Ejektordüse zur Erzeugung der Kühlluft.

Figur 5 eine Brennkraftmaschine mit Retarder und einer Ejektordüse im Nebenstrom zur Abgasleitung, die in einer Kühlluftkanalführung hinter dem Wärmetauscher angeordnet ist.

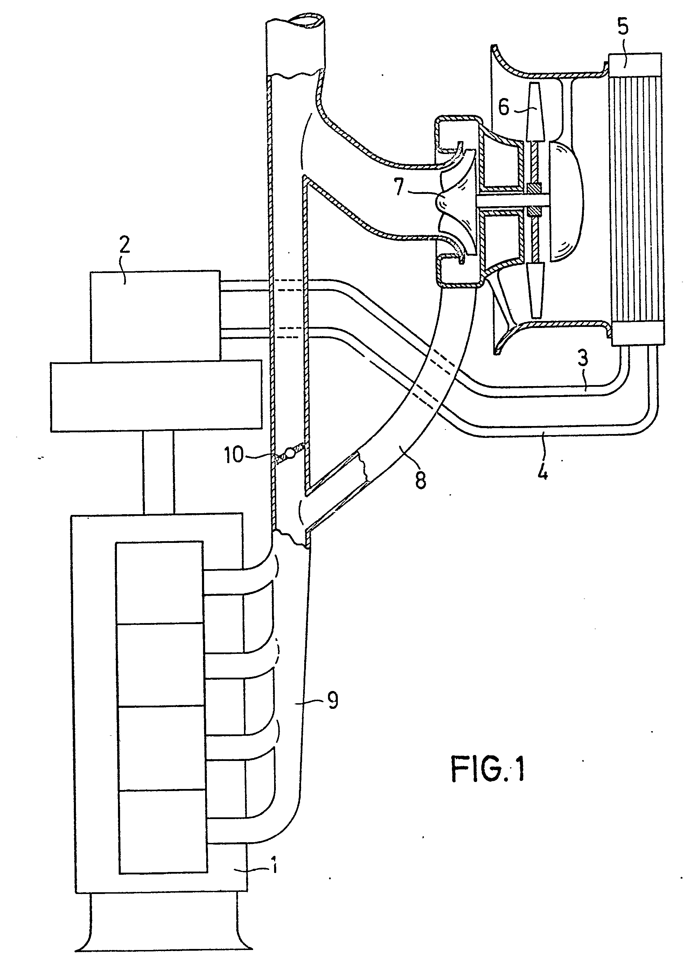

In Fig. 1 ist eine luftgekühlte Brennkraftmaschine 1 dargestellt, an der ein Retarder 2 angeschlossen ist. Die Erfindung ist jedoch nicht auf luftgekühlte Brennkraftmaschinen beschränkt, sondern sie ist auch für wassergekühlte anwendbar.

Der Retarder 2 ist über zwei Leitungen 3, 4 mit einem Retarderölwärmetauscher 5 verbunden, in dem das im Retarderbetrieb stark erwärmte Öl rückgekühlt werden kann. Hierzu weist der Retarderölwärmetauscher ein Gebläse 6 auf, welches von einer Turbine 7 direkt angetrieben wird.

Es ist auch denkbar, zwischen der Turbine 7 und dem Gebläse 6 ein Zwischengetriebe anzuordnen.

Die Turbine 7 ist in einer Umgehungsleitung 8 zur Abgasleitung 9 der Brennkraftmaschine angeordnet. Ferner ist in der Abgasleitung 9 — in Strömungsrichtung des Abgases hinter dem Abzweig der Umgehungsleitung 8 — eine die Abgasleitung verschließende Sperre 10 angeordnet. Diese Sperre ist bevorzugt als handelsübliche Auspuffbremsklappe ausgebildet, die gleichzeitig mit dem Einschalten des Retarders entweder von Hand oder automatisch eingeschaltet wird.

Arbeitet die Brennkraftmaschine im Bremsbetrieb, so wird das in dem Retarder 2 zirkulierende Öl erwärmt. Es wird deshalb zu dem Wärmetauscher 5 geleitet, um gekühlt zu werden. Gleichzeitig wird mit Einschalten des Retarders 2 die Auspuffbremsklappe 10 eingeschaltet, so daß der im Bremsbetrieb von der Brennkraftmaschine 1 gelieferte Gasstrom — da der Brennkraftmaschine während des Bremsbetriebes keine Verbrennung stattfindet, arbeitet sie praktisch als Kompressor und liefert deshalb keinen Abgasstrom, sondern nur einen Gasstrom — durch die Umgehungsleitung 8 zu der Turbine 7 geleitet wird und von dort wieder in die Abgasleitung 9 zurückkehrt. Dadurch wird die Turbine 7 angetrieben, wodurch sich ebenfalls das Gebläse 6 dreht. Die Turbine 7 ist hierbei vorteilhafterweise so ausgelegt, daß sie im Bereich schlechter Wirkungsgrade arbeitet, damit der durch die Nebenleitung 8 geleitete Gasstrom aufgestaut wird, so daß gleichzeitig die Brennkraftmaschine 1 gegen einen höheren Ausgangsdruck arbeiten muß, so daß ihre Bremsleistung zusätzlich erhöht wird. Durch entsprechendes Öffnen oder Schließen der Auspuffbremsklappe 10 kann der durch die Turbine 7 strömende Gasstrom reguliert und damit die Drehzahl des Gebläses 6 verändert werden. Die Auspuffbremsklappensteuerung arbeitet hierbei vorteilhaft in Abhängigkeit der Retarderöltemperatur. Wird der Retarder 2 wieder ausgeschaltet, so wird ebenfalls die Auspuffbremsklappe 10 wieder geöffnet und die Brennkraftmaschine gefeuert, so daß die Brennkraftmaschine 1 wieder gegen den üblichen Auspuffgegendruck arbeiten kann. Gleichzeitig wird dadurch der durch die Umgehungsleitung 8 strömende Abgasstrom praktisch unterbunden, da die Turbine 7 ihm einen größeren Widerstand entgegensetzt als die Abgasleitung 9. Damit steht auch das Gebläse 6, da in dem Wärmetauscher 7 kein Retarderöl im normalen Motorbetrieb rückgekühlt werden muß.

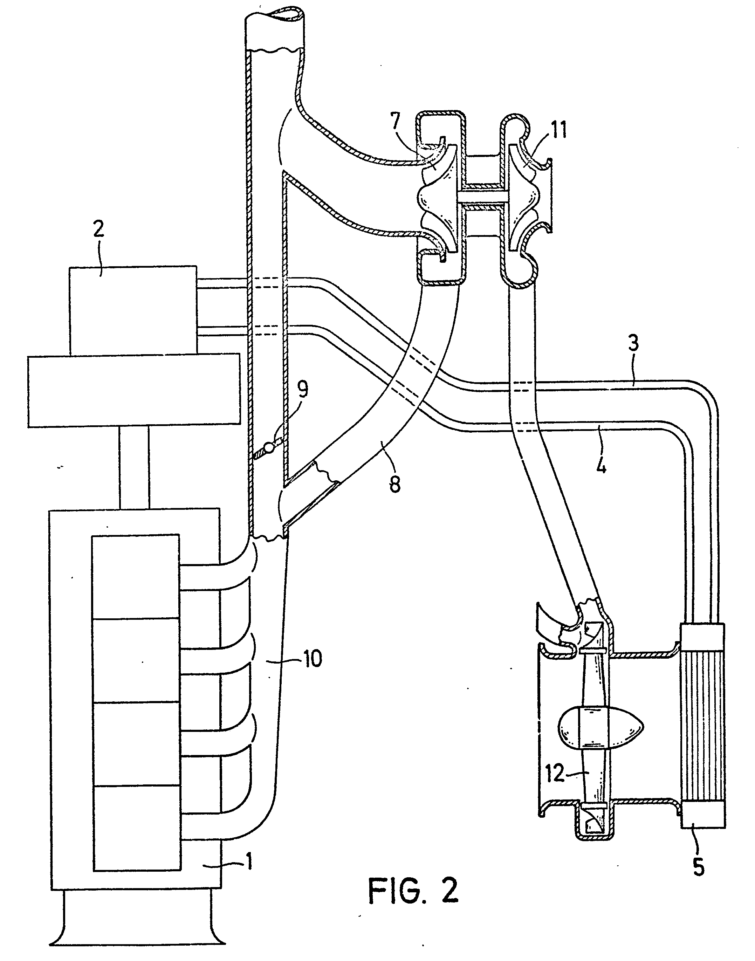

Die Ausbildung der Fig. 2 unterscheidet sich von Fig. 1 nur dadurch, daß die Turbine 7 nicht direkt mit dem Gebläse verbunden ist, sondern mit einem Kompressor 11. Die Turbine 7 und der Kompressor 11 bilden einen an sich bekannten Abgasturbolader, jedoch mit dem Unterschied, daß er nicht von den Abgasen der Brennkraftmaschine, sondern in deren Bremsbetrieb von dem von der Brennkraftmaschine gelieferten verdichteten Gasstrom (Umgebungsluft) durchströmt wird und einen schlechten Wirkungsgrad aufweist, damit ein erhöhter Gegendruck für die Brennkraftmaschine erzeugt wird.

Der Kompressor 11 saugt Umgebungsluft im Betrieb an und fördert ihn zu einem Tip-Fan 12, d. h. einem Gebläselaufrad, welches auf seinem Umfang Schaufeln aufweist, die von einem Gasstrom derart beaufschlagt werden, daß sich die gesamte Einrichtung dreht.

Im Unterschied zu Fig. 1 wird hier der Kühlluftstrom durch das Tip-Fan 12 durch den Retarderölwärmetauscher gesaugt. Im übrigen arbeitet diese Anlage genauso wie die in Fig. 1 beschriebene.

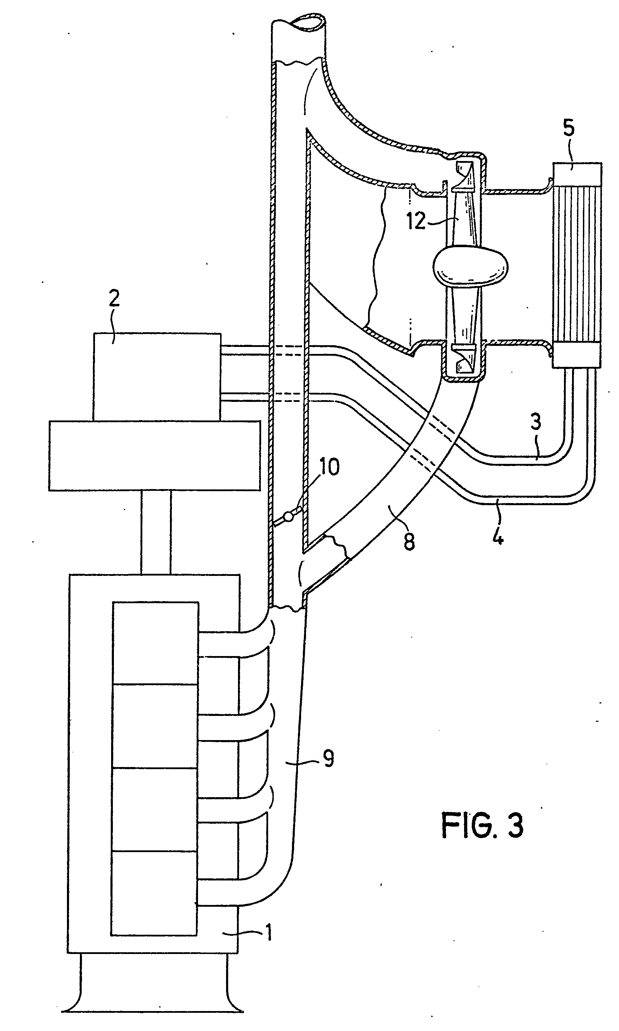

Die Ausführung nach Fig. 3 unterscheidet sich von der nach Fig. 2 dadurch, daß keine Turbine und kein Kompressor vorgesehen ist, sondern, daß die Umgehungsleitung 8 direkt zu dem Tip-Fan 12 führt.

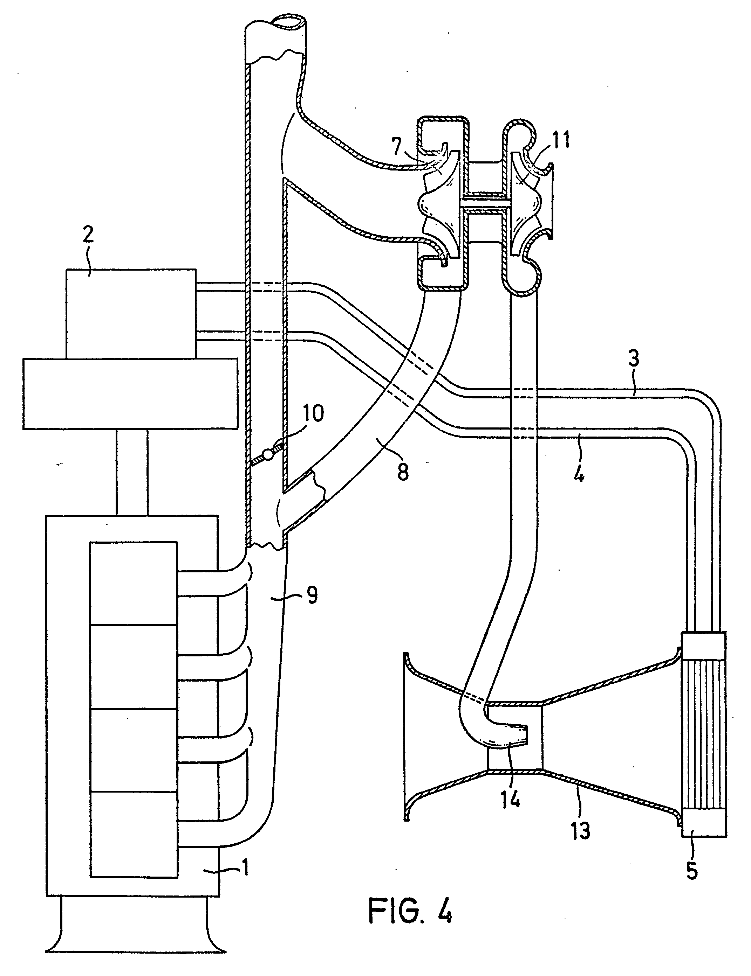

In Fig. 4 ist kein Gebläse zur Erzeugung eines Kühlluftstromes durch den Retarderölwärmetauscher vorgesehen, sondern in Strömungsrichtung der Kühlluft vor dem Retarderölwärmetauscher 5 ist eine sich verjüngende und wieder erweiternde Kühlluftführung 13 angeordnet. In deren engsten Querschnitt mündet eine Ejektordüse 14, die mit dem Druckausgang des Kompressors 11 nach Fig. 2 verbunden ist. Durch diese Anordnung wird in der Kühlluftführung 13 ein hoher Unterdruck erzeugt, so daß Umgebungsluft angesaugt und mit hoher Geschwindigkeit in Richtung auf den Wärmetauscher 5 und durch ihn hindurch gefördert wird.

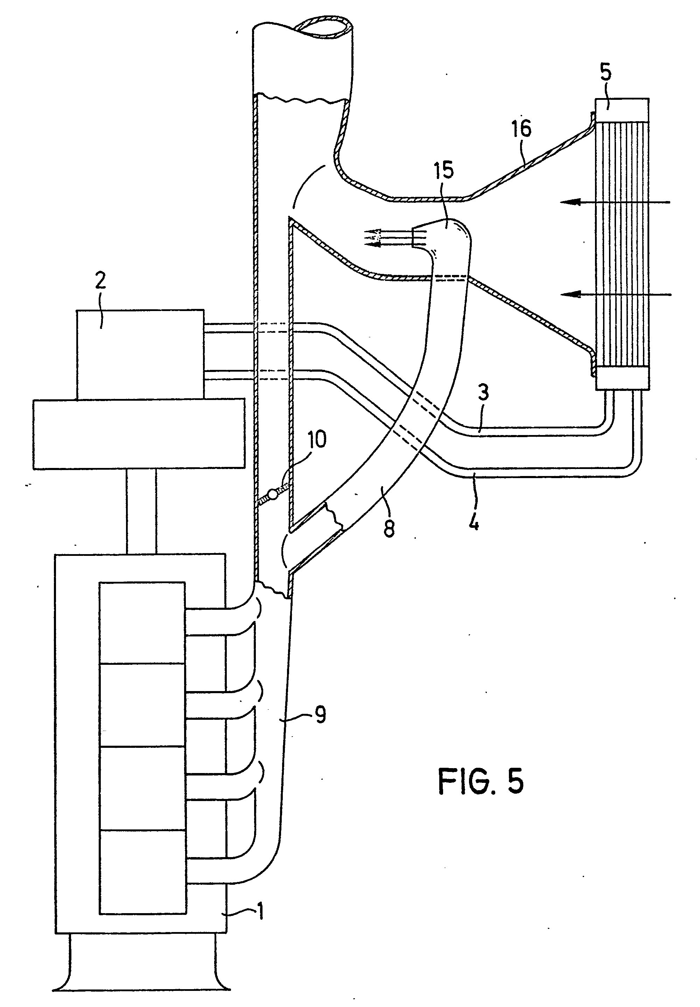

Fig. 5 unterscheidet sich — ähnlich wie Fig. 3 von Fig. 2 — von Fig. 4 dadurch, daß die Ejektordüse 15 unmittelbar mit der Umgehungsleitung 8 verbunden ist.

Da der an der Ejektordüse 15 ausströmende Gasstrom sich nicht mit der durch die Kühlluftführung 16 strömenden Kühlluft aufgrund seiner Temperatur und seiner Reinheit von dem Retarderölwärmetauscher 5 mischen darf, durchströmt die angesaugte Kühlluft den Wärmetauscher 5 zuerst, vermischt sich dann mit dem aus dem Ejektor austretenden Gasstrom und gelangt mit diesem in die Abgasleitung 9 zurück.

Je nach Größe dieser Rückleitung der Umgehungsleitung kann es bei allen Ausführungsbeispielen sinnvoll sein, daß sie im normalen Fahrbetrieb durch eine geeignete Einrichtung verschlossen ist, um zu verhindern, daß durch sie Abgas entweicht.

## Ansprüche

1. Brennkraftmaschine mit einem Retarder (2) und einem das Retarderöl rückkühlenden Wärmetauscher (5), der im Bremsbetrieb Kühlluft zugeführt erhält, dadurch gekennzeichnet, daß in der Abgasleitung (9) der Brennkraftmaschine (1) im Bremsbetrieb eine die Abgasleitung (9) verschließende Sperre (10) vorgesehen ist und daß zur Ableitung des derart gestauten Gasstromes eine vor der Sperre (10) abzweigende Leitung angeordnet ist, in der eine die Energie des Gasstromes umwandelnde Einrichtung zur Förderung des Kühlluftstromes zum Retarderölwärmetauscher (5) vorgesehen ist.

2. Brennkraftmaschine mit einem Retarder nach Anspruch 1, dadurch gekennzeichnet, daß die abzweigende Leitung eine Umgehungsleitung ist, die nach der Sperre (10) wieder in die Abgasleitung (9) einmundet.

3. Brennkraftmaschine mit einem Retarder nach Anspruch 1 oder 2, dadurch gekennzeichnet, daß die Einrichtung eine Turbine (7) ist, die direkt oder über ein Zwischengetriebe mit einem Gebläse (6) verbunden ist.

4. Brennkraftmaschine mit einem Retarder nach einem der vorangegangenen Ansprüche, dadurch gekennzeichnet, daß die Turbine (7) mit einem Kompressor (11) verbunden ist, daß das Kühlgebläse (6) auf seinem Läuferumfang Schaufeln aufweist, die in einem Ringraum umlaufen und daß dieser Ringraum mit dem Druckausgang des Kompressors (11) verbunden ist.

5. Brennkraftmaschine mit einem Retarder nach einem der vorangegangenen Ansprüche, dadurch gekennzeichnet, daß der Druckausgang des Kompressors (11) mit einem Ejektor (14) verbunden ist, der in Strömungsrichtung der Kühlluft vor dem Retarderölwärmetauscher in einer Kühlluftführung (13) angeordnet ist.

6. Brennkraftmaschine mit einem Retarder nach einem der vorangegangenen Ansprüche, dadurch gekennzeichnet, daß die in der abzweigenden Leitung (8) angeordnete Einrichtung ein Ejektor (15) ist, der in Strömungsrichtung der Kühlluft hinter dem Retarderölwärmetauscher (5) in einer Kühlluftführung (16) angeordnet ist.

7. Brennkraftmaschine mit einem Retarder nach einem der Ansprüche 2 bis 6, dadurch gekennzeichnet, daß die Turbine (7), der Kompressor (11), das Kühlluftgebläse (6) und der Wärmetauscher (5) eine bauliche Einheit bilden, die mit der Brennkraftmaschine (1) lediglich über die Umgehungsleitung (8) zur Abgasleitung (9) verbunden ist.

## Claims

1. An internal combustion engine including a retarder (2) and a heat exchanger which latter serves to cool the retarder oil and to which, during the braking operation, cooling air is ducted, characterized in that the exhaust pipe (9) of the internal combustion engine (1) is provided with a baffle (10) for closing, during the braking operation, the pipe (9), that a duct for diverting the thus blocked gas stream is branched off the pipe upstream of the baffle (10), and in that the branch duct includes a device capable of converting the energy of the gas stream for the purpose of delivering a stream of cooling air to the heat exchanger (5) serving to cool the retarder oil.

2. An internal combustion engine including a retarder according to claim 1, characterized in that the branch duct is a by-pass duct which rejoins the exhaust pipe (9) downstream of the baffle (10).

3. An internal combustion engine including a retarder according to claim 1 or claim 2, characterized in that the device is a turbine (7) connected directly or via an intermediate geared transmission to a fan (6).

4. An internal combustion engine including a retarder according to any of the preceding claims, characterized in that the turbine (7) is connected to a compressor (11), that vanes are mounted on the circumferential face of the rotor of the cooling fan (6), and in that the vanes rotate in an annular space connected to the compressed-air outlet of the compressor (11).

5. An internal combustion engine including a retarder according to any of the preceding claims, characterized in that the compressed-air outlet of the compressor (11) is connected to an ejector (14) disposed — viewed in the flow direction of the cooling air — within a cooling-air duct (13) in front of the heat exchanger serving to cool the retarder oil.

6. An internal combustion engine including a retarder according to any of the preceding claims, characterized in that the device arranged in the branch duct (8) is an ejector (15) disposed —viewed in the flow direction of the cooling air — within a cooling-air duct (16) at the rear of the heat exchanger (5) serving to cool the retarder oil.

7. An internal combustion engine including a retarder according to any of the claims 2 to 6, characterized in that the turbine (7), the compressor (11), the cooling-air fan (6) and the heat exchanger (5) form a constructional unit connected to the internal combustion engine (1) solely through the by-pass duct (8) by-passing the exhaust pipe (9).

**Revendications**

1. Moteur à combustion interne comportant un ralentisseur (2) et un échangeur de chaleur (5) refroidissant de nouveau l'huile du ralentisseur, et qui, en mode de freinage, reçoit de l'air de refroidissement, caractérisé en ce que la tubulure de gaz d'échappement (9) du moteur à combustion interne (1) comporte un clapet (10) qui ferme la tubulure de gaz d'échappement (9) en mode de freinage et pour évacuer la veine de gaz ainsi accumulée, il est prévu une conduite de contournement prenant naissance en avant du clapet (10), et dans laquelle il est prévu une installation qui convertit l'énergie de la veine de gaz pour le transfert de la veine d'air de refroidissement vers l'échangeur de chaleur de l'huile du ralentisseur (5).

2. Moteur à combustion interne avec un ralentisseur selon la revendication 1, caractérisé en ce que la conduite de dérivation est une conduite de contournement qui débouche de nouveau dans la tubulure de gaz d'échappement (9) en aval du clapet (10).

3. Moteur à combustion interne avec un ralentisseur selon les revendications 1 ou 2, caractérisé en ce que l'installation est une turbine (7) qui est reliée directement à la machine soufflante (6) ou par une transmission intermédiaire.

4. Moteur à combustion interne avec un ralentisseur selon l'une des revendications précédentes, caractérisé en ce que la turbine (7) est reliée à un compresseur (11), en ce que la machine soufflante de refroidissement (6) comporte des aubes à la périphérie de son rotor, ces aubes tournant dans un volume annulaire et en ce que ce volume annulaire est relié à la sortie de pression du compresseur (11).

5. Moteur à combustion interne à ralentisseur selon l'une des revendications précédentes, caractérisé en ce que la sortie de pression du compresseur (11) est reliée à un éjecteur (14) qui est prévu dans un organe de guidage d'air de refroidissement (13) en amont de l'échangeur de chaleur de l'huile du ralentisseur, pour le sens d'écoulement de l'air de refroidissement.

6. Moteur à combustion interne avec un ralentisseur selon l'une des revendications précédentes, caractérisé en ce que l'installation prévue dans la conduite de dérivation (8) est un éjecteur (15) qui est prévu derrière l'échangeur de chaleur de l'huile du ralentisseur (5) dans une conduite d'alimentation en air de refroidissement (16), pris dans la direction d'écoulement de l'air de refroidissement.

7. Moteur à combustion interne avec un ralentisseur selon l'une des revendications précédentes 2 à 6, caractérisé en ce que la turbine (7), le compresseur (11), la machine soufflante d'air de refroidissement (6) et l'échangeur de chaleur (5) forment un ensemble constructif qui est relié au moteur à combustion interne (1) uniquement par la conduite de dérivation (8) allant à la conduite de gaz d'échappement (9).

FIG.1

FIG. 2

FIG. 3

FIG. 4

FIG. 5